# EUROPÄISCHE PATENTSCHRIFT

(11) **EP 4 586 586 B1**
(45) Veröffentlichungstag und Bekanntmachung des Hinweises auf die Patenterteilung: **16.09.2026**
(21) Anmeldenummer: 24151146.8
(22) Anmeldetag: 10.01.2024
(51) Int. Cl.: H04L 67/12, H04L 9/40, G06F 21/56, G05B 19/418

(54) **INTERFACESYSTEM ZUR ABWICKLUNG UND KONTROLLE DES DATENFLUSSES ZWISCHEN EINER CLOUD UND EINER TECHNISCHEN ANLAGE**
INTERFACE SYSTEM FOR THE EXECUTION AND CONTROL OF DATA FLOW BETWEEN A CLOUD AND A TECHNICAL INSTALLATION
SYSTÈME D'INTERFACE POUR LE DÉROULEMENT ET LE CONTRÔLE DU FLUX DE DONNÉES ENTRE UN NUAGE ET UNE INSTALLATION TECHNIQUE

(43) Veröffentlichungstag der Anmeldung: 16.07.2025
(73) Patentinhaber: TTTech Computertechnik Aktiengesellschaft, 1040 Wien (AT)
(72) Erfinder: Kopetz, Hermann, 9201 Krumpendorf (AT)
(74) Vertreter: Patentanwaltskanzlei Matschnig & Forsthuber OG

(56) Entgegenhaltungen:
- EP-A1- 4 300 883
- CN-A- 112 953 897
- US-B1- 10 915 081

## Beschreibung

Die Erfindung betrifft ein Interfacesystem zur Abwicklung und Kontrolle eines Datenflusses zwischen einer Cloud und einer technischen Anlage oder des Datenflusses von der Cloud zu der technischen Anlage, wobei das Interfacesystem zwei Fault Containment Units, FCUs, die FCU_1 und die FCU_2, umfasst, wobei das Interfacesystem über ein externes Interface der FCU_1 mit der technischen Anlage verbindbar ist, und wobei das Interfacesystem über ein externes Interface der FCU_2 mit der Cloud verbindbar ist.

In einigen technischen Anwendungen kann zwischen einem *stand-alone* Betrieb und einem *optimierten Betrieb* einer technischen Anlage unterschieden werden.

Zum Beispiel wird in einer Photovoltaik-Anlage die von den PV-Paneelen gelieferte Energie im *stand-alone Betrieb* nach einem fixen Schema verwaltet. Zuerst werden die lokalen Verbraucher versorgt, dann wird die Batterie geladen und schließlich wird die verbleibende Energie in das elektrische Netz geliefert.

Im *optimierten Betrieb* wird auf der Basis von Wetterdaten aus dem Internet, den geplanten Verbrauchsdaten und den vom Markt erwarteten zeitlich gestaffelten Energiepreisen von komplexen Optimierungsalgorithmen errechnet, wann Energie ins Netz geliefert und wann die Energie in der Batterie gespeichert werden soll, um einen optimalen finanziellen Ertrag zu erwirtschaften.

Die komplexen Optimierungsalgorithmen, die die optimalen Sollwerte für den Betrieb der technischen Anlage errechnen, können in der Cloud ausgeführt werden.

Das Dokument US 10 915 081 B1 bezieht sich allgemein auf verfahrenstechnische Anlagen und auf Prozessleitsysteme, insbesondere auf die die Sicherstellung der Übergabe von verfahrensanlagenbezogenen Daten aus Prozessanlagen/Prozessleitsystemen an externe Systeme, die prozessanlagenbezogene Daten nutzen oder verbrauchen.Es ist eine Aufgabe der Erfindung, zu verhindern, dass von der Cloud Malware in die technische Anlage gelangt.

Diese Aufgabe wird mit einem oben genannten Intersystem dadurch gelöst, dass erfindungsgemäß das Interfacesystem zwei Fault Containment Units, FCUs, die FCU_1 und die FCU_2, umfasst, wobei das Interfacesystem über ein externes Interface der FCU_1 mit der technischen Anlage verbindbar ist, und wobei das Interfacesystem über ein externes Interface der FCU_2 mit der Cloud verbindbar ist oder die FCU_1 ein Subsystem der technischen Anlage ist, und wobei die FCU_1 und die FCU_2 über einen Kommunikationskanal verbunden sind, über welchen ein Datenfluss von Daten von der FCU_2 zu der FCU_1 übertragen werden kann, und wobei die FCU_1 derart konfiguriert ist, dass sie keine Daten, welche von der FCU_2 an die FCU_1 über diesen Kommunikationskanal übermittelt werden, in ihre Befehlsregister schreiben kann.

Eine FCU umfasst ein Befehlsregister, das alle Befehle enthält, welche die FCU (bzw. der oder die CPUs der FCU) ausführen kann. Durch die spezielle, beispielsweise softwareseitige, Konfiguration der FCU_1 kann die FCU_1 Daten, welche von der FCU_2 an die FCU_1 übertragen werden, nicht in ihre Befehlsregister schreiben. Damit wird verhindert, dass Malware von der FCU_2 bzw. aus der Cloud auf der FCU_1 zur Ausführung gebracht werden kann. Es besteht somit zwischen den beiden FCUs in Richtung von der FCU_2 zu der FCU_1 über den Kommunikationskanale eine restriktive Datenverbindung, wobei die FCU_2 ausschließlich über diesen Kommunikationskanal Daten an die FCU_1 übertragen kann.

Die Erfindung betrifft somit ein *Interfacesystem,* welches zwischen einer technischen *Anlage* und der *Cloud* angeordnet ist und das verhindert, dass von der Cloud kommende Malware zu einem Versagen von wesentlichen Funktionen der technischen Anlage führen können.

Durch die Erfindung ist es z.B. nicht notwendig, dass auf der FCU_1 Malware-Erkennungsprogramme ausgeführt werden.

Vorteilhafte Ausgestaltungen der Erfindung sind in den abhängigen Ansprüchen beschrieben.

Es ist von Vorteil, wenn der Datenfluss von der FCU_2 zur FCU_1 ausschließlich mittels einer Folge von periodischen Nachrichteninstanzen, den sogenannten FCU_2-Nachrichteninstanzen, welche von der FCU_2 an die FCU_1 gesendet werden, realisiert ist, wobei jede Nachrichteninstanz dieser Folge von Nachrichteninstanzen das gleiche, vorzugsweise a priori festgelegte, Format hat, und wobei
die FCU_1 überprüft, ob
   - in jeder Periode eine FCU_2-Nachrichteninstanz bei der FCU_1 eintrifft, und
   - ob jeder in einem Datenfeld einer eingetroffenen FCU_2-Nachrichteninstanz enthaltene Wert innerhalb eines Wertebereichs, der diesem Datenfeld in der FCU_1 zugeordnet ist, liegt, und wobei
      im Falle, dass
      ∘ eine FCU_2-Nachrichteninstanz bei der FCU_1 nicht eintrifft
      ∘ die Überprüfung einer eingetroffenen FCU_2-Nachrichteninstanz durch die FCU_1 einen Fehler in einer empfangenen FCU_2-Nachrichteninstanz feststellt,
die fehlerhafte FCU_2-Nachrichtinstanz verworfen wird und ein in der FCU_1 vorhandenes Programm zur Realisierung eines stand-alone Betriebs der technischen Anlage aktiviert wird.

Auf diese Weise wird ein restriktiver Datenfluss von der FCU_2 zur FCU_1 realisiert.

Damit kann verhindert werden, dass ein Fehler in den optimalen Sollwerten, die von der Cloud errechnet werden, oder ein Fehler in den Daten, die von der Cloud oder der FCU_2 geliefert werden, zu einem Ausfall der technischen Anlage führt.

Der Begriff "FCU_2 Nachrichteninstanz" bezeichnet eine Nachrichteninstanz, die von der FCU_2 gesendet wird.

Es kann vorgesehen sein, dass die FCU_1 und die FCU_2 in einer Baueinheit realisiert sind. Das Interfacesystem bildet in diesem Fall einen Interfacerechner.

Weiters kann vorgesehen sein, dass ein erfolgreicher Empfang eines von der FCU_1 zur FCU_2 gesendeten Files durch die FCU_2 in einer periodischen, dem Empfang des gesendeten Files folgenden FCU_2-Nachrichteninstanz quittiert wird.

Mit Vorteil kann vorgesehen sein, dass die beiden FCUs über eine globale Zeit verfügen und die periodische Folge der Nachrichteninstanzen von der FCU_2 zur FCU_1 zeitgesteuert gesendet wird.

Insbesondere kann dabei vorgesehen sein, dass die beiden FCUs Zugriff auf ein globales Zeitsignal (z.B. GPS oder DCF77) haben.

Beispielsweise kann vorgesehen sein, dass die FCU_1 und die FCU_2 jeweils über eine unabhängige Stromversorgung verfügen.

Es kann vorgesehen sein, dass der Kommunikationskanal zwischen einem internen Interface der FCU_1 und einem internen Interface der FCU_2 realisiert wird, wobei vorzugsweise der Kommunikationskanal ein gesicherter drahtloser Kanal ist.

Über diese internen Interfaces bzw. den drahtlosen Kanal wird vorzugsweise der Datenfluss von der FCU_2 zu der FCU_1 übertragen und es findet die weitere Kommunikation von FCU_1 zur FCU_2 und umgekehrt statt.

Der Begriff "intern" bezieht sich dabei nicht auf eine interne Anordnung, sondern darauf, dass die über diese (internen) Interfaces stattfindende Kommunikation bzw. die damit realisiert Verbindung Interface-intern ist. Ebenso betrifft der Begriff "externes" Interface nicht eine externe Anordnung des Interfaces, sondern eine Kommunikation mit bzw. Verbindung zu einer Vorrichtung/Gerät, welche extern zu dem Interfacesystem ist.

Weiters kann vorgesehen sein, dass die Kommunikation zwischen dem externen Interface der FCU_1 und der technischen Anlage über einen gesicherten drahtlosen Kanal abgewickelt wird.

Außerdem kann vorgesehen sein, dass in der FCU_1 ein Speicher vorgesehen ist, in welchem Daten der technischen Anlage, insbesondere erfasste Daten der technischen Anlage gespeichert werden können.

Es kann vorgesehen sein, dass die FCU_1 über eine uneingeschränkte Verbindung zum Internet verfügt, die mittels eines mechanischen Schalters unterbrochen werden kann.

Zusammenfassend wird erfindungsgemäß vorgeschlagen, zwischen der technischen Anlage und der Cloud einen Interfacerechner zu installieren, der verhindert, dass Malware von der Cloud in die technische Anlage gelangen kann, und/oder der nach Erkennen eines Fehlers in den von der Cloud gelieferten Sollwerten den nicht-optimalen *stand-alone Betrieb* der technischen Anlage aktiviert.

Erfindungsgemäß umfasst das Interfacesystem zwei Fault-Containment Units, FCUs, eine erste FCU_1 und eine zweite FCU_2, und eine restriktive Datenverbindung zwischen diesen beiden FCUs.

Eine Fault-Containment Unit (FCU) ist ein abgeschlossenes Subsystem eines verteilten Computersystems, das die unmittelbaren Auswirkungen einer Fehlerursache auf das betroffene Subsystem, also auf die FCU selbst, abkapselt, gleichgültig ob die Fehlerursache in der Hardware, der Software oder einer Intrusion liegt, und wo im Fehlerfall ein definiertes Fehlerverhalten des gesamten Subsystems, z.B. ein Totalausfall, auftritt. Im Entwurf muss sichergestellt werden, dass FCUs unabhängig voneinander ausfallen. Unterschiedliche FCUs sollen auf getrennter Hardware unterschiedliche Software ausführen und vorzugsweise über eine getrennte Stromversorgung verfügen.

Jede der beiden FCUs des Interfacesystems verfügt über mindestens eine externe Schnittstelle (Interface) und mindestens eine interne Schnittstelle (Interface).

Die zumindest eine externe Schnittstelle der FCU_1 stellt die Verbindung(en) zur technischen Anlage her und geht auf die gegebenen Schnittstellenanforderungen der technischen Anlage ein. Die zumindest eine interne Schnittstelle der FCU_1 ist mit einer internen Schnittstelle der FCU_2 verbunden. Über diese internen Schnittstellen wird der restriktive Datenfluss zwischen den beiden FCUs realisiert. Die zumindest eine externe Schnittstelle der FCU_2 ist mit der Cloud verbunden.

Die Funktionen der FCU_1 können auch in ein Subsystem der technischen Anlage verlagert werden. In diesem Fall bildet dieses Subsystem der technischen Anlage die FCU_1. Der restriktive Datenfluss findet dann zwischen diesem Subsystem der technischen Anlage und der FCU_2 statt.

Der Datenfluss von der FCU_1 zur FCU_2 ist nicht eingeschränkt. Ein File-Transfer von der FCU_1 zur FCU_2 kann durch ein Bestätigungssignal (Acknowledgement Signal) quittiert werden, welches nach dem erfolgreichen Empfang der Files durch die FCU_2 in einer der periodischen Nachrichten von der FCU_2 zur FCU_1 gesendet wird.

Die strengen Restriktionen im Datenfluss von der FCU_2 zur FCU_1 machen es einem Intruder technisch unmöglich, Malware von der FCU_2 zur FCU_1 zu übertragen, selbst wenn er die vollständige Kontrolle über die FCU_2 übernommen hat. Damit wird die FCU_1 und damit die technische Anlage vor Attacken aus der Cloud geschützt.

Die Kommunikation zwischen dem internen Interface der FCU_1 und dem internen Interface der FCU_2 kann über einen drahtgebundenen oder über einen gesicherten drahtlosen Kommunikationskanal abgewickelt werden.

### Erklärung von verwendeten Begriffen

Im Folgenden wird die angenommene Bedeutung von wichtigen Begriffen, die in der Beschreibung verwendet werden, dargelegt.
**Cloud:** Unter dem Begriff *Cloud* versteht man eine Anzahl von räumlich entfernten Computern, auf die über eine gesicherte Internetverbindung zugegriffen werden kann
**Fault-Containment Unit:** Eine Fault-Containment Unit (FCU) ist ein abgeschlossenes Subsystem eines verteilten Computersystems, das die unmittelbaren Auswirkungen einer Fehlerursache auf das betroffene Subsystem (also auf die FCU) abkapselt, gleichgültig ob die Fehlerursache in der Hardware, der Software oder einer Intrusion liegt, und wo im Fehlerfall ein definiertes Fehlerverhalten des gesamten Subsystems, z.B. ein Totalausfall, auftritt
**Globales Zeitsignal:** Ein externes Signal, das die globale Zeit vorgibt (z.B. GPS oder DCF-77).
**Interfacerechner:** Ein Computer, der die Verbindung, die Datenanpassung und die Kontrolle des Datenflusses zwischen einer technischen Anlage und der Cloud realisiert.
**Interfacesystem:** Ein System, das die Verbindung, die Datenanpassung und die Kontrolle des Datenflusses zwischen einer technischen Anlage und der Cloud realisiert.
**Intruder:** Ein fremder Eindringling in ein Computersystem.
**Intrusion:** Ein Einbruch (erfolgreicher Hackerangriff) in ein Computersystem.
**Ist-Daten:** Istwerte, die den aktuellen Zustand der technischen Anlage in einer Periode beschreiben.
**Malware:** Software (wie z. B. Viren, Würmer usw.), die in Computersysteme eindringt und dort Störungen oder Schäden verursachen kann.
**Optimierungssystem:** Ein System, das unter Berücksichtigung von gegebenen externen Bedingungen (z.B. dynamischen Marktbedingungen) die Sollwerte für den optimalen Betrieb einer technischen Anlage vorgibt.
**PAR Protokoll:** Ein PAR Protokoll (*Positiv Acknowledgement with Retransmission*) ist ein in der Datenübertragung angewandtes Verfahren, um den Verlust von Daten während der Übertragung zu erkennen und zu vermeiden.
**Restriktiver Datenfluss:** Eine periodische Folge von Nachrichteninstanzen mit identischem Format, wo die erlaubten Wertebereiche der Datenfelder in jeder Instanz der Nachricht vom Empfänger der Nachricht überprüft werden und wo im Fehlerfall die fehlerhafte Instanz der Nachricht vom Empfänger verworfen wird.
**Restriktive Datenverbindung:** Eine Datenverbindung zwischen einem Sender und einem Empfänger, wobei der Empfänger Daten, die er über diese Datenverbindung empfängt, nicht in seine Befehlsregister schreiben kann.
**Soll-Daten:** Sollwerte für eine technischen Anlage in einer spezifizierten Periode.
**Stand-alone Betrieb:** Ein Betriebszustand, während dem die technische Anlage ohne Berücksichtigung von externen Bedingungen (z.B. dynamischen Marktbedingungen) betrieben wird.
**Technische Anlage:** Die Gesamtheit von örtlichen Subsystemen, die an der Lösung einer technischen Aufgabenstellung beteiligt sind. Z.B. sind in der technischen Anlage *Energiemanagementsystem* folgende mögliche Subsysteme beteiligt: die PV-Anlage, der Inverter, eine Batterie, eine Wallbox, eine Wärmepumpe und weitere lokale Energieverbraucher.

### Kurze Beschreibung der Zeichnungen

Im Folgenden ist die Erfindung anhand eines nicht einschränkenden Beispiels näher erörtert. Es zeigt
Fig. 1 beispielhaft eine Struktur eines erfindungsgemäßen *Interfacerechners* und den Anschluss des *Interfacerechners* an eine Cloud sowie an eine technische Anlage, und
Fig. 2 das Format der von der FCU_2 an die FCU_1 übermittelten Nachrichten.

### Detaillierte Beschreibung der Erfindung

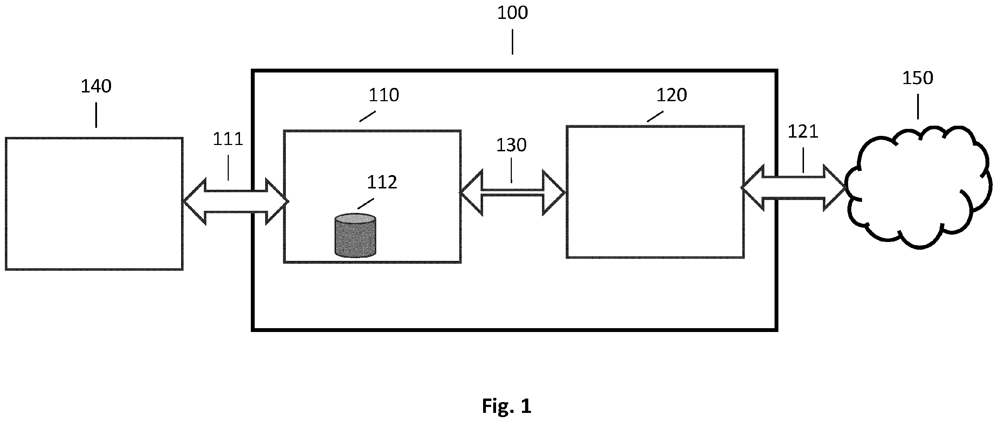

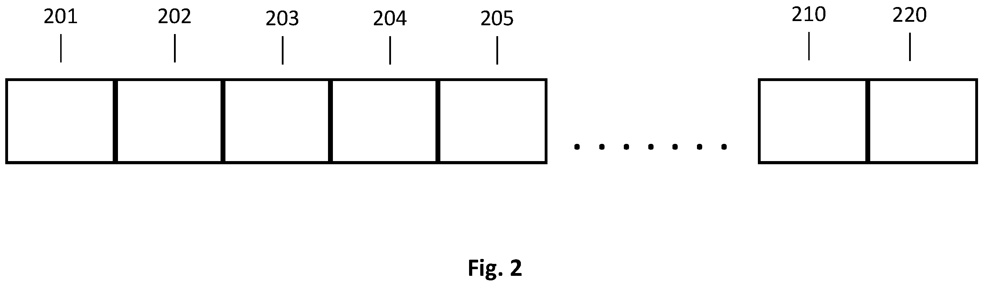

Im Folgenden ist eine von vielen möglichen Realisierungen der Erfindung an Hand der Figur 1 und Figur 2 im Detail erörtert.

Figur 1 zeigt eine mögliche Struktur eines Interfacesystems, wobei in diesem Beispiel das Interfacesystem als *Interfacerechner* **100** ausgebildet ist. Der Interfacerechner **100** umfasst zwei Fault-Containment Units (FCUs), FCU_1 **110** und FCU_2 **120.**

FCU_1 umfasst ein externes Interface, über welches ein Kommunikationskanal **111** zu einer technischen Anlage **140** realisiert wird.

FCU_2 umfasst ein externes Interface, über welches ein Kommunikationskanal **121** zu einer Cloud **150** realisiert wird.

Die FCU_1 **110** und die FCU_2 **120** umfassen jeweils ein internes Interface, über welches eine Datenverbindung **130** zwischen den beiden FCUs realisiert wird. Die Kommunikation über die, insbesondere restriktive, Datenverbindung **130** zwischen dem internen Interface der FCU_1 **110** und dem internen Interface der FCU_2 **120** kann über eine drahtgebundene Verbindung oder über einen gesicherten drahtlosen Kanal abgewickelt werden.

Der Begriff "extern" bringt dabei zum Ausdruck, dass es sich um ein Interface handelt, mit welchem eine Verbindung zu einer Vorrichtung, die extern zu dem Interfacerechner bzw - system ist, realisierbar ist. Der Begriff "extern" bedeutet allerdings nicht, dass Interface extern zu ihrer FCU ist.

Jede der beiden FCUs, die FCU_1 **110** und die FCU_2 **120,** stellt einen vollständigen Rechner mit von dem anderen Rechner unabhängiger Hardware, einer eigenen, vorteilhafterweise diversen Software und vorzugsweise einer eigenen Energieversorgung dar. FCU_1 110 ist über den Kommunikationskanal **111** mit der technischen Anlage **140,** insbesondere mit einem oder mehreren Subsystemen der technischen Anlage **140** verbunden. FCU_2 120 ist über den Kommunikationskanal **121** mit der Cloud verbunden. Die Kommunikationskanäle **111** und **121** können über ein drahtgebundenes Medium oder drahtlos mittels gesicherter Protokolle Daten austauschen.

Es ist von Vorteil, wenn die FCU_1 **110** und die FCU_2 **120** Zugriff auf eine globale Zeit haben. Die globale Zeit kann von einem externen Zeitsignal, z.B. GPS oder DCF77, übernommen werden.

Die technische Anlage **140** umfasst die Gesamtheit der Subsysteme, die an der Lösung einer technischen Aufgabenstellung am Ort der technischen Anlage beteiligt sind. Z.B. sind in einer technischen Anlage "*Energiemanagementsystem*" eine PV-Anlage, Inverter, eine Batterie, eine Wallbox, eine Wärmpumpe und weitere lokale Energieverbraucher beteiligte Subsysteme. Über den Kommunikationskanal **111** zur technischen Anlage **140** kann vorzugsweise jedes einzelne dieser Subsysteme angesprochen werden.

Die FCU_1 **110** und die FCU_2 **120** sind über einen Kommunikationskanal **130** verbunden, über welchen ein Datenfluss, insbesondere der gesamte Datenfluss der Daten, welche von der FCU_2 **120** zu der FCU_1 **110** übertragen werden, fließt. Die FCU_1 **110** ist derart konfiguriert, dass sie keine Daten, welche von der FCU_2 **120** an die FCU_1 **110** über diesen Kommunikationskanal **130** übermittelt werden, in ihre Befehlsregister schreiben kann.

Wird somit Malware über den Kommunikationskanal **130** von der FCU_2 zu der FCU_1 transportiert, kann diese auf der FCU_1 nicht ausgeführt werden, da die FCU_1 keine Daten, die sie von der FCU_2 erhält, in ihre Befehlsregister schreibt.

Zwischen der FCU_2 **120** zu der FCU_1 **110** ist außerdem ein restriktiver Datenfluss realisiert, dieser besteht aus einer periodischen, vorzugsweise zeitgesteuerten, Folge von Nachrichteninstanzen eines identischen Nachrichtenformats, wie dies anhand von Figur 2 und außerdem unter Verweis auf die Einleitung näher erörtert ist. Die Kommunikation über den Kommunikationskanal **130** zwischen der FCU_2 **120** und der FCU_1 **110** ist somit so restriktiv, dass über diesen Kommunikationskanal **130** keine Malware transportiert werden kann.

In der FCU_1 **110** ist vorzugsweise ein Datenspeicher **112** enthalten, in dem die Soll-Daten und Ist-Daten der technischen Anlage **140,** vorzugsweise in jeder Periode mit einem die Periode kennzeichnenden Zeitstempel, abgelegt werden können, damit bei Ausfall der Kommunikation mit der Cloud keine Betriebsdaten verloren werden.

Die FCU_1 **110** kann auch durch ein Subsystem der technischen Anlage **140** verwirklicht werden. In diesem Fall findet der restriktive Datenfluss zwischen der FCU_2 **120** und diesem Subsystem der technischen Anlage **140** statt.

Fig. 2 zeigt beispielhaft ein mögliches konstantes Nachrichtenformat. Alle Nachrichteninstanzen, die von der FCU_2 **120** an die FCU_1 **110** gesendet werden, haben einem solchen konstanten Nachrichtenformat, wie es Fig. 2 beispielhaft zeigt, zu entsprechen. Im ersten Feld **201** einer Nachrichteninstanz ist der Sendezeitstempel der Nachrichteninstanz enthalten, der auch zur Identifikation der Nachrichteninstanz herangezogen werden kann. Dieser von der FCU_2 **120** generierte Zeitstempel muss in einem Zeitintervall liegen, das die FCU_1 **110** unter Bezugnahme auf den zeitlichen Abstand zur vorangegangenen periodischen Nachrichteninstanz überprüfen kann.

Das Feld **202** beinhaltet einen Fehlercode oder einen Aktionscode, der einem Element aus der Liste von definierten Codes entsprechen muss. Das Feld **203** ist ein Parameterfeld, dessen Wertebereich von dem in Feld **202** enthaltenen Code abhängt.

Mit den Feldern **202** und **203** lässt sich ein PAR (*Positive Acknowledgement with Retransmission*) Protokoll eines File Transfers von der FCU_1 1**10** zur FCU_2 **120** implementieren. Nach dem erfolgreichen Empfang eines Files, das von der FCU_1 **110** zur FCU_2 **120** gesendet wurde, stellt die FCU_2 **120** in die nächste periodische Nachricht von der FCU_2 zur FCU_1 den in einer Liste der definierten Codes enthaltenen *Positive Acknowledgement Code* in das Feld **202** und den Filenamen (z.B. Sendezeitstempel des von der FCU_1 gesendeten Files) in das Feld **203.** Damit wird der erfolgreiche Empfang des von der FCU_1 **110** gesendeten Files durch die FCU_2 **120** quittiert. Wenn nach einem vorgegebenen Zeitintervall keine Quittung des gesendeten Files bei der FCU_1 **110** eingetroffen ist, so wird der Sendevorgang des Files von der FCU_1 **110** wiederholt.

Die Felder **204** bis **210** enthalten Soll-Werte für die Subsysteme der technischen Anlage **140.** Jeder dieser Sollwerte muss in einem Wertebereich liegen, den die FCU_1 **110** auf der Basis des gegenwärtigen Zustands der technischen Anlage **100** vorgibt oder welcher der FCU_1 **110** vorgegeben ist. Die Soll-Werte werden dabei von der Cloud **150** bereitgestellt.

Das letzte Feld **210** enthält einen CRC Code, um die syntaktische Integrität einer Nachrichteninstanz überprüfen zu können.

Wenn eine erwartete Nachrichteninstanz von der FCU_2 an die FCU_1 **110** ausfällt oder wenn in einem Datenfeld einer Nachrichteninstanz der FCU_2 **120** ein Wert enthalten ist, der außerhalb des von der FCU_1 **110** zu diesem Zeitpunkt als gültig betrachteten Wertebereichs liegt, so verwirft die FCU_1 **110** die fehlerhafte Nachrichteninstanz und aktiviert den stand-alone Betrieb der technischen Anlage **140.**

Vorzugsweise kann die FCU_1 **110** kurzfristig eine uneingeschränkte, zusätzliche, von der FCU_2 unabhängige Verbindung zum Internet zum Laden von neuer Software in die FCU_1 **110** realisieren. Diese Verbindung kann vorzugsweise nach erfolgreichem Abschluss des Ladevorgangs durch einen mechanischen Schalter unterbrochen werden. Anschließend muss die Integrität des Core-Images der FCU_1 überprüft werden, um sicherzustellen, dass keine Malware in der FCU_1 enthalten ist. Im Normalbetrieb darf keine direkte Verbindung von der FCU_1 **110** zum Internet bestehen.

## Patentansprüche

1. Interfacesystem (100) zur Abwicklung und Kontrolle eines Datenflusses zwischen einer *Cloud* (150) und einer *technischen Anlage* (140) oder des Datenflusses von der Cloud (150) zu der technischen Anlage (140),
wobei
das Interfacesystem (100) zwei Fault Containment Units, FCUs, die FCU_1 (110) und die FCU_2 (120), umfasst,
wobei
das Interfacesystem (100) über ein externes Interface der FCU_1 (110) mit der technischen Anlage (140) verbindbar ist oder die FCU_1 (110) ein Subsystem der technischen Anlage (140) ist,
und wobei
das Interfacesystem (100) über ein externes Interface der FCU_2 (120) mit der Cloud (150) verbindbar ist,
und wobei
die FCU_1 (110) und die FCU_2 (120) über einen Kommunikationskanal (130) verbunden sind, wobei über den Kommunikationskanal (130) ein Datenfluss von Daten von der FCU_2 (120) zu der FCU_1 (110) übertragen werden kann, **dadurch gekennzeichnet, dass**
die FCU_1 (110) derart konfiguriert ist, dass sie keine Daten, welche von der FCU_2 (120) an die FCU_1 (110) über diesen Kommunikationskanal (130) übermittelt werden, in ihre Befehlsregister schreiben kann.

2. Interfacesystem nach Anspruch 1, **wobei** der Datenfluss von der FCU_2 (120) zur FCU_1 (110) ausschließlich mittels einer Folge von periodischen Nachrichteninstanzen, den sogenannten FCU_2-Nachrichteninstanzen, welche von der FCU_2 an die FCU_1 gesendet werden, realisiert ist, wobei jede Nachrichteninstanz dieser Folge von Nachrichteninstanzen das gleiche, vorzugsweise *a priori* festgelegte, Format hat, und wobei
die FCU 1 (110) überprüft, ob
in jeder Periode eine FCU_2-Nachrichteninstanz bei der FCU_1 eintrifft, und
ob jeder in einem Datenfeld einer eingetroffenen FCU 2-Nachrichteninstanz enthaltene Wert innerhalb eines Wertebereichs, der diesem Datenfeld in der FCU 1 zugeordnet ist, liegt, und wobei
im Falle, dass
eine FCU_2-Nachrichteninstanz bei der FCU_1 nicht eintrifft die Überprüfung einer eingetroffenen FCU 2-Nachrichteninstanz durch die FCU 1 einen Fehler in einer empfangenen FCU 2-Nachrichteninstanz feststellt,
die fehlerhafte FCU_2-Nachrichtinstanz verworfen wird und ein in der FCU_1 vorhandenes Programm zur Realisierung eines stand-alone Betriebs der technischen Anlage aktiviert wird.

3. Interfacesystem nach Anspruch 1 oder 2, **wobei** die FCU_1 und die FCU_2 in einer Baueinheit realisiert sind.

4. Interfacesystem nach einem der vorhergehenden Ansprüche, **wobei** ein erfolgreicher Empfang eines von der FCU_1 zur FCU_2 gesendeten Files durch die FCU_2 in einer periodischen, dem Empfang des gesendeten Files folgenden FCU_2-Nachrichteninstanz quittiert wird.

5. Interfacesystem nach einem der Ansprüche 2 bis 4, **wobei** die beiden FCUs (110, 120) über eine globale Zeit verfügen und die periodische Folge der Nachrichteninstanzen von der FCU_2 (120) zur FCU_1 (110) zeitgesteuert gesendet wird.

6. Interfacesystem nach einem der vorhergehenden Ansprüche, **wobei** die beiden FCUs (110, 120) Zugriff auf ein globales Zeitsignal, z.B. GPS oder DCF77, haben.

7. Interfacesystem nach einem der vorhergehenden Ansprüche, **wobei** die FCU_1 (110) und die FCU_2 (120) jeweils über eine unabhängige Stromversorgung verfügen.

8. Interfacesystem nach einem der vorhergehenden Ansprüche, **wobei** der Kommunikationskanal (130) zwischen einem internen Interface der FCU_1 (110) und einem internen Interface der FCU_2 (120) realisiert wird, wobei vorzugsweise der Kommunikationskanal (130) ein gesicherter drahtloser Kanal ist.

9. Interfacesystem nach einem der vorhergehenden Ansprüche, **wobei** die Kommunikation zwischen dem externen Interface der FCU_1 (110) und der technischen Anlage (140) über einen gesicherten drahtlosen Kanal (111) abgewickelt wird.

10. Interfacesystem nach einem der vorhergehenden Ansprüche, **wobei** in der FCU_1 (110) ein Speicher (112) vorgesehen ist, in welchem Daten der technischen Anlage (140), insbesondere erfasste Daten der technischen Anlage gespeichert werden können.

11. Interfacesystem nach einem der vorhergehenden Ansprüche, **wobei** die FCU_1 (110) über eine uneingeschränkte Verbindung zum Internet verfügt, die mittels eines mechanischen Schalters unterbrochen werden kann.

## Claims

1. Interface system (100) for managing and controlling a data flow between a cloud (150) and a technical facility (140), or the data flow from the cloud (150) to the technical facility (140),
wherein
the interface system (100) comprises two Fault Containment Units (FCUs), FCU_1 (110) and FCU_2 (120),
wherein
the interface system (100) can be connected to the technical system (140) via an external interface of FCU_1 (110), or FCU_1 (110) is a subsystem of the technical system (140),
and wherein
the interface system (100) can be connected via an external interface of FCU_2 (120) to the cloud (150),
and wherein
the FCU_1 (110) and the FCU_2 (120) are connected via a communication channel (130), whereby a data flow of data from the FCU_2 (120) to the FCU_1 (110) via the communication channel (130), **characterized in that**
the FCU_1 (110) is configured such that it cannot write any data transmitted from the FCU_2 (120) to the FCU_1 (110) via this communication channel (130) into its command registers.

2. Interface system according to claim 1, wherein the data flow from FCU_2 (120) to FCU_1 (110) is implemented exclusively by means of a sequence of periodic message instances, known as FCU_2 message instances, which are sent from FCU_2 to FCU_1, wherein each message instance of this sequence of message instances has the same, preferably a priori defined, format, and wherein
the FCU_1 (110) checks whether
an FCU_2 message instance arrives at the FCU_1 in each period, and
whether each value contained in a data field of an arrived FCU_2 message instance lies within a value range assigned to that data field in the FCU_1, and wherein
in the event that
an FCU_2 message instance does not arrive at the FCU_1
the verification of an arrived FCU_2 message instance by the FCU_1 detects an error in a received FCU_2 message instance,
the erroneous FCU_2 message instance is discarded, and a program present in the FCU_1 for implementing stand-alone operation of the technical system is activated.

3. Interface system according to claim 1 or 2, wherein the FCU_1 and the FCU_2 are implemented in a single unit.

4. Interface system according to any of the preceding claims, wherein successful receipt by FCU_2 of a file sent from FCU_1 to FCU_2 is acknowledged by FCU_2 in a periodic FCU_2 message instance following the receipt of the sent file.

5. Interface system according to any one of claims 2 through 4, wherein the two FCUs (110, 120) have access to a global time source, and the periodic sequence of message instances is transmitted from FCU_2 (120) to FCU_1 (110) in a time-controlled manner.

6. Interface system according to any one of the preceding claims, wherein the two FCUs (110, 120) have access to a global time signal, e.g., GPS or DCF77.

7. Interface system according to any of the preceding claims, wherein FCU_1 (110) and FCU_2 (120) each have an independent power supply.

8. Interface system according to any of the preceding claims, wherein the communication channel (130) is established between an internal interface of FCU_1 (110) and an internal interface of FCU_2 (120), wherein the communication channel (130) is preferably a secure wireless channel.

9. Interface system according to any of the preceding claims, wherein communication between the external interface of FCU_1 (110) and the technical system (140) is conducted via a secure wireless channel (111).

10. Interface system according to any of the preceding claims, wherein a memory (112) is provided in the FCU_1 (110) in which data from the technical system (140), in particular data collected from the technical system, can be stored.

11. Interface system according to one of the preceding claims, wherein the FCU_1 (110) has an unrestricted connection to the Internet that can be interrupted by means of a mechanical switch.

## Revendications

1. Système d'interface (100) destiné à gérer et à contrôler un flux de données entre un cloud (150) et une installation technique (140), ou le flux de données allant du cloud (150) vers l'installation technique (140),
dans lequel
le système d'interface (100) comprend deux unités de confinement des défaillances (FCU), à savoir la FCU_1 (110) et la FCU_2 (120),
dans lequel
le système d'interface (100) peut être connecté à l'installation technique (140) via une interface externe de la FCU_1 (110) ou la FCU_1 (110) est un sous-système de l'installation technique (140),
et dans lequel
le système d'interface (100) peut être connecté via une interface externe de la FCU_2 (120) au cloud (150),
et dans lequel
la FCU_1 (110) et la FCU_2 (120) sont reliées par un canal de communication (130), un flux de données pouvant être transmis par ce canal de communication (130) de la FCU_2 (120) vers la FCU_1 (110) peut être transmis, **caractérisé en ce que**
la FCU_1 (110) est configurée de telle sorte qu'elle ne peut pas écrire dans ses registres de commande les données transmises par la FCU_2 (120) à la FCU_1 (110) via ce canal de communication (130).

2. Système d'interface selon la revendication 1, dans lequel le flux de données de la FCU_2 (120) vers la FCU_1 (110) est réalisé exclusivement au moyen d'une séquence d'instances de messages périodiques, appelées instances de messages FCU_2, qui sont envoyées par la FCU_2 à la FCU_1, , chaque instance de message de cette séquence d'instances de message ayant le même format, de préférence défini a priori, et
la FCU_1 (110) vérifiant si,
à chaque période, une instance de message FCU_2 arrive à la FCU_1, et
si chaque valeur contenue dans un champ de données d'une instance de message FCU_2 reçue se situe dans une plage de valeurs attribuée à ce champ de données dans la FCU_1, et dans lequel dans le cas où
aucune instance de message FCU_2 n'arrive à la FCU_1
la vérification d'une instance de message FCU_2 reçue par la FCU_1 détecte une erreur dans une instance de message FCU_2 reçue,
l'instance de message FCU_2 erronée est rejetée et un programme présent dans la FCU_1, destiné à assurer un fonctionnement autonome de l'installation technique, est activé.

3. Système d'interface selon la revendication 1 ou 2, dans lequel la FCU_1 et la FCU_2 sont réalisées dans un même module.

4. Système d'interface selon l'une des revendications précédentes, dans lequel la réception réussie par la FCU_2 d'un fichier envoyé par la FCU_1 à la FCU_2 est confirmée par la FCU_2 dans une instance de message FCU_2 périodique suivant la réception du fichier envoyé.

5. Système d'interface selon l'une des revendications 2 à 4, dans lequel les deux FCU (110, 120) disposent d'une horloge globale et la séquence périodique des instances de message est transmise de manière synchronisée de la FCU_2 (120) vers la FCU_1 (110).

6. Système d'interface selon l'une des revendications précédentes, dans lequel les deux FCU (110, 120) ont accès à un signal horaire global, par exemple le GPS ou le DCF77.

7. Système d'interface selon l'une des revendications précédentes, dans lequel la FCU_1 (110) et la FCU_2 (120) disposent chacune d'une alimentation électrique indépendante.

8. Système d'interface selon l'une des revendications précédentes, dans lequel le canal de communication (130) est établi entre une interface interne de la FCU_1 (110) et une interface interne de la FCU_2 (120), le canal de communication (130) étant de préférence un canal sans fil sécurisé.

9. Système d'interface selon l'une des revendications précédentes, dans lequel la communication entre l'interface externe de la FCU_1 (110) et l'installation technique (140) s'effectue via un canal sans fil sécurisé (111).

10. Système d'interface selon l'une des revendications précédentes, dans lequel il est prévu, dans la FCU_1 (110), une mémoire (112) dans laquelle peuvent être stockées des données de l'installation technique (140), en particulier des données enregistrées de l'installation technique.

11. Système d'interface selon l'une des revendications précédentes, dans lequel la FCU_1 (110) dispose d'une connexion illimitée à Internet, qui peut être interrompue à l'aide d'un interrupteur mécanique.
